# EUROPÄISCHE PATENTSCHRIFT

(11) **EP 0 999 966 B1**
(45) Veröffentlichungstag und Bekanntmachung des Hinweises auf die Patenterteilung: **05.12.2001**
(21) Anmeldenummer: 98939637.9
(22) Anmeldetag: 22.07.1998
(51) Int. Cl.: B62B 3/02

(54) **TRANSPORTSYSTEM**
TRANSPORTATION SYSTEM
SYSTEME DE TRANSPORT

(30) Priorität: 01.08.1997 DE 29713739 U
(43) Veröffentlichungstag der Anmeldung: 17.05.2000
(73) Patentinhaber: Strothmann, Rolf, 66123 Saarbrücken (DE)
(72) Erfinder: Strothmann, Rolf, 66123 Saarbrücken (DE)
(74) Vertreter: Bernhardt, Winfrid, Dr.-Ing.
(86) Internationale Anmeldenummer: EP9804595
(87) Internationale Veröffentlichungsnummer: WO9906259

(56) Entgegenhaltungen:
- EP-A- 0 811 469
- DE-A- 4 103 379
- FR-A- 2 708 898

## Beschreibung

Die Erfindung betrifft ein Transportsystem mit einer fahrbaren Transporteinrichtung für die Mitführung in einem gegenüber der Transporteinrichtung größeren Fahrzeug, wobei die fahrbare Transporteinrichtung in der Art eines durch Muskelkraft unter Ziehen oder Schieben anzutreibenden Wagens handhabbar ist und einen elektrischen Antrieb aufweist, und wobei an dem Fahrzeug Vorkehrungen für die Mitführung der Transporteinrichtung vorgesehen sind.

Aus der DE 41 03 379 A1 ist ein Stadtfahrzeug bekannt mit einem Gepäckraum, in dem ein Einkaufsbehälter und ein zusammenklappbares Fahrgestell für den Einkaufsbehälter untergebracht werden können, wobei das Fahrgestell mit einem Elektromotor zum Antrieb versehen ist.

Aus der WO 95/03096 geht eine fahrbare Transporteinrichtung mit einem unterstützenden elektrischen Antrieb hervor, wobei sich der Antrieb ohne weitere Vorkehrungen durch einen Benutzer automatisch einschaltet, wenn der die Transporteinrichtung in der Art eines zu ziehenden oder zu schiebenden Wagens gebraucht.

Durch Transportsysteme der eingangs erwähnten Art lassen sich Transportprobleme lösen, die dann entstehen, wenn das größere Fahrzeug aus irgendwelchen Gründen nicht unmittelbar bis zu einem Be- oder Entladeort gelangen kann und zu be- oder entladende Gegenstände dann über verhältnismäßig große Entfernungen zum oder vom Fahrzeug weg transportiert werden müssen. Durch die erfindungsgemäße Mitführung in dem Fahrzeug ist gesichert, daß für diese Transporte eine fahrbare Transporteinrichtung in jedem Fall zur Verfügung steht. Die Mitführung dieser Transporteinrichtung im Fahrzeug bereitet keine besonderen Probleme, da das Fahrzeug für diese Miffuhrung erfindungsgemäß vorbereitet ist.

Der vorliegenden Erfindung liegt die Aufgabe zugrunde, ein neues, im Komfort verbessertes Transportsystem der eingangs erwähnten Art zu schaffen.

Das diese Aufgabe lösende Transportsystem nach der Erfindung ist dadurch gekennzeichnet, daß der elektrische Antrieb durch die Handhabung der Transporteinrichtung aktivierbar ist, und
daß die mitgeführte Transporteinrichtung in Funktionsverbindung mit dem Fahrzeug derart steht, daß eine mit der elektrischen Anlage des Fahrzeugs verbundene Einrichtung zur Ladung einer Batterie des elektrischen Antriebs vorgesehen ist oder/und
daß eine die Mitführung oder/und Nichtmitführung der fahrbaren Transporteinrichtung im Fahrzeug anzeigende Signaleinrichtung vorgesehen ist.

Durch eine Signaleinrichtung kann gesichert werden, daß die fahrbare Vorrichtung nach Gebrauch wieder im Fahrzeug verstaut und nicht irgendwo vergessen wird. Im Extremfall könnte vorgesehen sein, daß der Motor des Fahrzeugs nicht anspringt, wenn die fahrbare Transporteinrichtung nicht ordnungsgemäß im Fahrzeug verstaut ist.

Entsprechend einem möglichen Anwendungsgebiet für die vorliegende Erfindung handelt es sich bei dem größeren Fahrzeug vorzugsweise um eine PKW oder Kleinbus, und die fahrbare Transporteinrichtung bietet Zuladungsmöglichkeiten, die mit denjenigen eines Einkaufswagens, wie er in Großmärkten verwendet wird und dort zum Transport gekaufter Waren vom Verkaufsstand bis zum Parkplatz zur Verfügung steht, vergleichbar sind. Entsprechend eignet sich die vorangehend erwähnte Ausführungsform für das erfindungs-gemäße Transportsystem zum Einkauf in Innenstädten, wo zwischen Verkaufsstand und Parkplatz im allgemeinen noch größere Entfernungen als in Großmärkten zu überwinden sind, Einkaufswagen zur allgemeinen Verwendung dort aber nicht zur Verfügung stehen. Durch die Erfindung werden also die oft mit Innenstadteinkäufen verbundenen Unannehmlichkeiten beseitigt, gekaufte Waren über größere Entfernungen bis zu einem Parkplatz transportieren zu müssen. Somit kann die Erfindung Anreize dafür schaffen, an sich interessantere Innenstadteinkäufe solchen in Großmärkten am Stadtrand vorzuziehen. Die Erfindung leistet also letztlich ein Beitrag zur Erhaltung der Innenstädte.

Durch den elektrischen Antrieb können mühelos schwerere Einkaufsgegenstände transportiert werden, für deren Erwerb Innenstadtgeschäfte wegen des umständlichen Abtransports bisher kaum noch in Betracht kamen.

Vorzugsweise weist der elektrische Antrieb eine aufgebrachte Muskelantriebskräfte sensorisch erfassende Antriebssteuerung auf, welche unter Einregelung auf einen vorgegebenen Wert einer aufzubringenden Muskelantriebskraft die Antriebskraft des Antriebs ausgleichend einstellt. Eine fahrbare Transpartvorrichtung mit einem derart gesteuerten Antrieb setzt dem Benutzer einen vorgegebenen, unter allen Fahrbedingungen gleichbleibenden Antriebswiderstand entgegen, der bequem bemessen sein kann, während ein weitaus größerer Teil der erforderlichen Antriebskraft von dem elektrischen Antrieb aufgebracht wird.

Vorzugsweise ist der vorgegebene Wert der aufzubringenden Muskelantriebskraft z.B. zur Anpassung an individuelle Bedürfnisse variierbar. Indem der Benutzer einen wenn auch bequem bemessenen Teil der Antriebsenergie selbst aufbringt, kann die Batteriekapazität des Antriebs entsprechend klein bemessen werden, was sich wiederum vorteilhaft auf die Gesamtmasse der fahrbaren Transporteinrichtung auswirkt.

Die motorgetriebene fahrbare Transporteinrichtung ist also handzuhaben wie eine durch Ziehen oder Schieben anzutreibende Vorrichtung, wobei die Transporteinrichtung zur Fahrtrichtungsänderung über eine die Muskelkraft übertragende Zug- oder/und Schubstange lenkbar ist.

Als Vorkehrungen für die Miffuhrung der Transporteinrichtung können am Fahrzeug entsprechende, vorzugsweise genormte Halterungseinrichtungen vorgesehen sein, wobei diese Halterungseinrichtungen z.B. einen formangepaßten Aufnahmeraum für die Transporteinrichtung und/oder formangepaßte Aufnahmenischen für Teile der Transporteinrichtung umfassen, so daß sie im Fahrzeug platzsparend und sicher verstaut werden kann. Die Halterungseinrichtungen können zusätzliche Mittel zur Befestigung der Transporteinrichtung am Fahrzeug umfassen.

Vorzugsweise ist die fahrbare Transporteinrichtung unter Verringerung ihrer Abmessungen vorzugsweise auf Normmaße zusammenlegbar, insbesondere zusammenklappbar, und die Halterungseinrichtungen sind dementsprechend zum Halten, ggf. auch zum Zusammenhalten, der Transporteinrichtung in einem zusammengelegten Zustand vorgesehen. Es ist auch denkbar, daß die Halterungseinrichtungen beim Zusammenlegen der Transporteinrichtung zu Hilfe genommen werden, indem z.B. die fahrbare Vorrichtung zum Zusammenlegen an Halterungsteilen befestigt geeignet abgestützt wird.

In einer besonderen Ausführungsform umfaßt die fahrbare Transporteinrichtung zur Zuladung einen Container oder ist mit einem Container koppelbar, wobei dieser Container vorzugsweise genormte Abmessungen aufweist. Entsprechend kann das größere Fahrzeug zur Mitführung genormte Aufnahmeräume aufweisen, wobei es denkbar ist, daß die fahrbare Transporteinrichtung in einen solchen Aufnahmeraum hinein zur Mitführung eingefahren werden kann. Über das Transportsystem hinaus könnten solche genormten Kleincontainer allgemeine Verwendung bei der Verschickung von Gegenständen spielen, wobei entsprechend genormte Aufnahmehalterungen z.B. in Lager- und Verkaufsräumen vorgesehen werden könnten.

Die Erfindung soll nun anhand eines Ausführungsbeispiels und der beiliegenden, sich auf dieses Ausführungsbeispiel beziehenden Zeichnungen näher erläutert und beschrieben werden. Es zeigen:
- Fig. 1: ein Ausführungsbeispiel für eine gemäß der Erfindung verwendbare fahrbare Transporteinrichtung,
- Fig. 2: ein Ausführungsbeispiel für ein zur Mifführung der fahrbaren Transporteinrichtung von Fig. 1 vorbereitetes Fahrzeug,
- Fig. 3: ein weiteres Ausführungsbeispiel für ein zur Mitführung der fahrbaren Transporteinrichtung von Fig. 1 vorbereitetes Fahrzeug,
- Fig. 4: ein weiteres Ausführungsbeispiel für eine gemäß der Erfindung verwendbare fahrbare Transporteinrichtung, und
- Fig. 5: ein für die Mitführung der Transporteinrichtung von Fig. 4 vorbereitetes Fahrzeug.

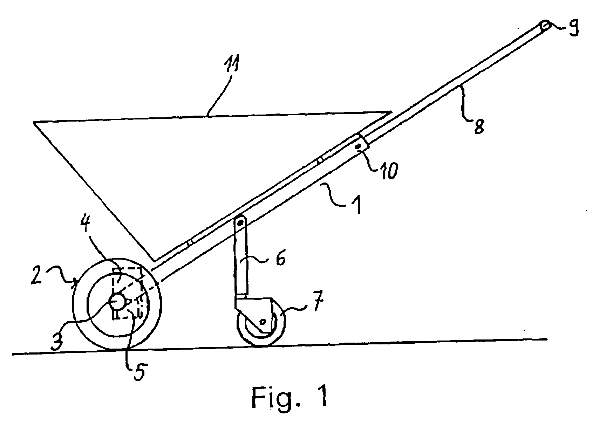

In Fig. 1 ist eine als Einkaufswagen vorgesehene fahrbare Transporteinrichtung mit einem Trägerrahmen 1 dargestellt, an welchem ein Räderpaar 2 von im Abstand zueinander angeordneten Rädern vorgesehen ist. An einer die Räder verbindenden Achse 3 ist ein Batteriefach 4 und ein Gehäuse 5 für eine Steuerschaltung vorgesehen. In den Rädern des Radpaares 2 sind in der Fig. 1 nicht sichtbare Elektromotoren untergebracht. deren Läufer jeweils in die Räder des Radpaares 2 integriert sind.

An den Trägerrahmen 1 ist ein Trägerbügel 6 für ein um eine vertikale Achse drehbares. nachlaufendes Stützrad 7 angelenkt. Der Trägerbügel 6 mit dem Stützrad 7 ist durch nicht gezeigte Einrichtungen in der in Fig. 1 gezeigten Stellung arretierbar.

Mit dem Bezugszeichen 8 ist in der Fig. 1 ein Zug-/Schubstangenpaar bezeichnet, dessen Schubstangen an einem Ende über einen Griff 9 verbunden sind. Die Schubstangen des Schubstangenpaares sind in Rohrteilen des Trägerrahmens 1 verschiebbar und können in der in Fig. 1 gezeigten Stellung gegen Verschiebung in den Rohrteilen durch einen Arretierungsbolzen 10 gesichert werden.

Auf dem Trägerrahmen 1 ist ein in dem gezeigten Ausführungsbeispiel korbartiger Ladebehälter 11 vorgesehen.

Zur Verkleinerung der Abmessungen der fahrbaren Einrichtung ist der Ladebehälter zusammenlegbar, so daß sich seine Teile im wesentlichen parallel zu dem Trägerrahmen 1 erstrecken. Der Trägerbügel 6 mit dem Stützrad 7 ist in Richtung zu dem Radpaar 2 einklappbar, und das Zug-/Schubstangenpaar mit dem Griff 9 kann in die Rohrteile des Trägerrahmens 1 eingeschoben werden.

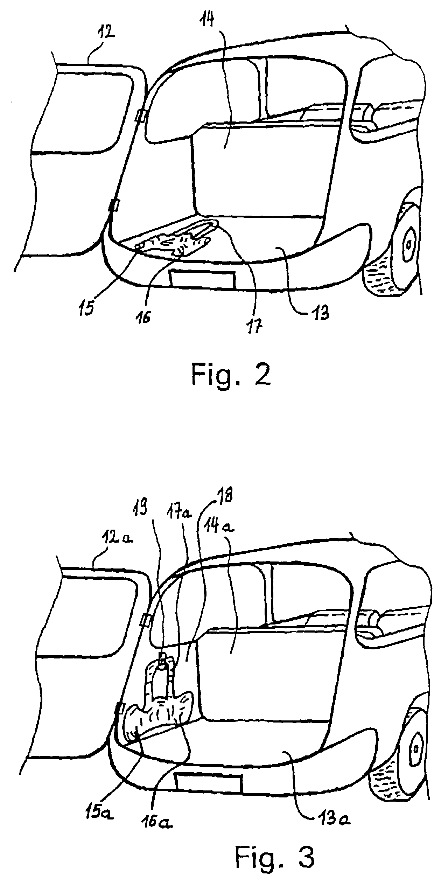

Es wird nun auf Fig. 2 Bezug genommen, wo die Rückseite eines Kleinbusses mit einer aufgeklappten Hecktür 12 zu sehen ist. In einer Bodenladefläche 13, die sich hinter einer Rückbank 14 des Kleinbusses erstreckt, ist ein Vertiefungsprofil vorgesehen, in welches die in Fig. 1 gezeigte fahrbare Vorrichtung einlegbar ist. Das Vertiefungsprofil weist Hauptvertiefungen 15 und 16 für das Radpaar 2 auf. Ein rillenartiges Vertiefungsprofil 17 ist für die Versenkung eines Teils des Trägerrahmens 1 und des Griffes 9 vorgesehen.

Vorgesehene Einrichtungen zur Ladung der Batterie im Batteriefach 4 während der Mitführung der fahrbaren Transporteinrichtung sowie Schaltkontakte, über die eine die Mitführung oder/und Nichtmitführung anzeigende Signaleinrichtung im Fahrzeug betätigt werden kann, sind in der Fig. 2 nicht sichtbar.

Die in das Vertiefungsprofil eingelegte fahrbare Vorrichtung gemäß Fig. 1 ist auf dem Ladeboden 13 gegen Verschiebung arretiert und so sicher im Fahrzeug verstaut. Zur weiteren Befestigung könnten z.B. die Vorrichtung bügelartig übergreifende Befestigungsteile vorgesehen sein.

Zur Benutzung wird der zusammengelegte, in dem Vertiefungsprofil untergebrachte Einkaufswagen aus dem Vertiefungsprofil herausgehoben und in den in Fig. 1 gezeigten Zustand gebracht, in dem u.a. das Zug-/Schubstangenpaar 8 aus den Rohrteilen des Trägerrahmens 1 herausgezogen ist. Auf das Ausklappen des Stützrades 7 kann ggf. verzichtet werden, sofern nicht beabsichtigt ist, schwere Gegenstände zu transportieren.

Die in dem Gehäuse 5 untergebrachte Motorsteuerung empfängt Meßsignale von einem in der Fig. 1 nicht gezeigten Kraftsensor, der anhand von Verformungen des Trägerrahmens 1 die von einem Benutzer aufgebrachte Zug- oder/und Schubkraft ermittelt. Durch einen in der Steuerschaltung vorgesehenen Regelungsmechanismus wird das Antriebsmoment durch die in den Rädern 2 vorgesehenen Motoren stets so gesteuert, daß die fahrbare Vorrichtung dem Benutzer unabhängig von den Fahrbedingungen, stets den gleichen Antriebswiderstand entgegensetzt. In der WO 95/03096 ist ein Golfwagen beschrieben, der über eine solche Antriebssteuerung verfügt.

Bei der Rückkehr zum Fahrzeug können in dem Ladebehälter 11 transportierte Gegenstände auf dem Ladeboden 13 zusammen mit der fahrbaren Vorrichtung verstaut werden.

Zum Zusammenlegen der fahrbaren Vorrichtung werden zweckmäßig zunächst die Räder des Radpaares 2 in die Hauptvertiefungen 15 und 16 eingelegt, wodurch die Vorrichtung derart gehaltert ist, daß das Zug-/Schubstangenpaar bequem in die Rohrteile des Trägerrahmens 1 eingeschoben und das Stützrad 7 eingeklappt werden kann. Der Trägerrahmen 1 wird dann verschwenkt, so daß ein Teil davon in der Rillenausnehmung 17 und das Stützrad 7 in einem Vertiefungsraum zwischen den Hauptvertiefungen 15 und 16 versenkt wird. Abschließend kann der Ladebehälter 11 zusammengelegt werden, so daß er sich im wesentlichen parallel zu dem Trägerrahmen erstreckt und eine der Auflagefläche für Ladegut bilden kann.

Die erwähnte Signaleinrichtung zeigt dem Fahrer an, daß die fahrbare Vorrichtung sich im Fahrzeug befindet und ordnungsgemäß verstaut ist. Während der Mitführung kann die Batterie der fahrbaren Einrichtung über die elektrische Anlage des Fahrzeugs geladen werden. Es wird nun auf Fig. 3 Bezug genommen, wo gleiche oder gleichwirkende Teile mit derselben, jedoch mit dem Buchstaben a versehenen Bezugszahl wie in der vorangehenden Figur beschrieben sind.

Das Ausführungsbeispiel von Fig. 3 unterscheidet sich von dem Ausführungsbeispiel von Fig. 2 dadurch. daß ein Vertiefungsprofil mit Hauptvertiefungen 15a und 16a in einer Seitenwand 18 eines Heckladeraums eines Kleinbusses vorgesehen ist. Mit 19 ist ein Befestigungsbügel bezeichnet, der verhindert, daß der in einen rillenförmigen Teil 17a des Vertiefungsprofils eingelegte Trägerrahmen 1 bzw. Griff 9 einer fahrbaren Vorrichtung aus der rillenförmigen Vertiefung gelangen und die fahrbare Vorrichtung daher in den Laderaum hineinumkippen kann.

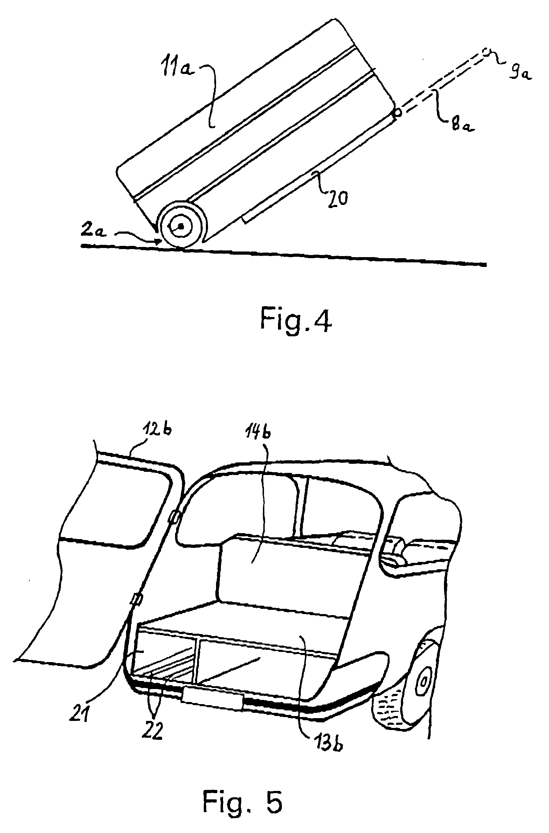

Es wird nun auf Fig. 4 Bezug genommen wo ein weiteres Ausführungsbeispiel für eine fahrbare Transporteinrichtung gezeigt ist.

Die Abmessungen dieser Transporteinrichtung sind durch einen beladbaren Container 11a bestimmt. Der in dem gezeigten Ausführungsbeispiel Normmaße aufweisende Container 11a ist an seiner Unterseite mit Führungsschienen 20 versehen, in denen ein Zug-/Schubstangenpaar 8a verschiebbar gelagert ist. Die Zugstangen des Schubstangenpaars 8a sind über einen Griff 9a miteinander verbunden, wobei der Griff, wie in Fig. 4 gezeigt ist, zusammen mit dem Schubstangenpaar aus den Führungsschienen 20 herausziehbar und über nicht gezeigte Einrichtungen in der gezeigten Stellung arretierbar ist.

Die fahrbare Transporteinrichtung von Fig. 4 ist in gleicher Weise mit einem Motorantrieb wie die Einrichtung von Fig. 1 versehen, wobei in der Figur nicht dargestellte Motoren in Rädern 2a untergebracht sind. Die Räder 2a sind in seitlichen Ausnehmungen des Containers 11a derart angeordnet, daß sie nicht über die Außenabmessungen des Containers 11a hinausragen. Eine zur Energieversorgung der Motoren in den Rädern verwendete Batterie sowie eine elektronische Motorsteuereinheit, in der Fig. 4 nicht sichtbar, sind in dem Container 11a untergebracht.

Wie aus der Fig. 5 hervorgeht, in welcher gleiche oder gleichwirkende Teile mit derselben, jedoch mit dem Buchstaben b versehenen Bezugszahl wie in den Fig. 2 und 3 dargestellt sind, kann für die fahrbare Vorrichtung von Fig. 4 an einem Fahrzeug z.B. hinter einer Rückbank 14b unterhalb eines Ladebodens 13b ein entsprechender Aufnahmeraum 21 vorgesehen sein, welcher im wesentlichen die Abmessungen des Containers 11a aufweist. In dem Aufnahmeraum 21 sind Führungsrillen 22 für die Führungsschienen 20 vorgesehen,

Die fahrbare Vorrichtung von Fig. 4, deren Räder 2a über die Außenabmessungen des Containers 11a nicht hinaus vorstehen, kann zur Verstauung im Fahrzeug in den Aufnahmeraum 21 eingeschoben werden, wobei abschließend der Griff 9a durch Einschieben des Zugstangenpaars 8a in die Führungsschienen 20 soweit einschiebbar ist. daß der Griff 9a etwa bündig mit dem Ende des Containers 11a abschließt.

Bei entsprechender Normung des Aufnahmeraums 21 könnte die Normabmessungen aufweisende Transporteinrichtung von Fig. 4 in Fahrzeugen unterschiedlicher Art und von unterschiedlichen Herstellern verwendet werden.

Im Unterschied zu der gezeigten Einschubmöglichkeit der fahrbaren Vorrichtung in den Aufnahmeraum 21 wäre es auch denkbar, einen Aufnahmeraum so zu gestalten und Rampeneinrichtungen derart vorzusehen, daß die fahrbare Vorrichtung zur Mitführung in dem Fahrzeug in das Fahrzeug hinein einfahrbar ist.

Die Mitführung einer fahrbaren Vorrichtung ist keinesweges auf PKW oder Kleinbusse beschränkt, sondern es kommen als mitführende Fahrzeuge auch Massenverkehrsmittel einschließlich Schienenfahrzeuge in Betracht. Die fahrbare Vorrichtung könnte z.B. entsprechend unterschiedlichen Transportzwecken abweichend von der gezeigten Ausführungsform konstruiert sein.

## Patentansprüche

1. Transportsystem mit einer fahrbaren Transporteinrichtung für die Mitführung in einem gegenüber der Transporteinrichtung größeren Fahrzeug, wobei die fahrbare Transporteinrichtung in der Art eines durch Muskelkraft unter Ziehen oder Schieben anzutreibenden Wagens handhabbar ist und einen elektrischen Antrieb aufweist, und wobei an dem Fahrzeug Vorkehrungen (15-17) für die Mitführung der Transporteinrichtung vorgesehen sind,
**dadurch gekennzeichnet,**
**daß** der elektrische Anhieb durch die Handhabung der Transporteinrichtung aktivierbar ist, und
**daß** die mitgeführte Transporteinrichtung in Funktionsverbindung mit dem Fahrzeug derart steht, **daß** eine mit der elektrischen Anlage des Fahrzeugs verbundene Einrichtung zur Ladung einer Batterie des elektrischen Antriebs vorgesehen ist oder/und
**daß** eine die Mitführung oder/und Nichtmitführung der fahrbaren Transporteinrichtung im Fahrzeug anzeigende Signaleinrichtung vorgesehen ist.

2. Transportsystem nach Anspruch 1,
**dadurch gekennzeichnet,**
**daß** der elektrische Antrieb eine aufgebrachte Muskelantriebskräfte sensorisch erfassende Antriebssteuerung aufweist, welche unter Einregelung auf einen vorgegebenen Wert einer aufzubringenden Muskelantriebskraft die Antriebskraft des Hilfsantriebs ausgleichend einstellt.

3. Transportsystem nach Anspruch 2,
**dadurch gekennzeichnet,**
**daß** der vorgegebene Wert der aufzubringenden Muskelantriebskraft einstellbar ist.

4. Transportsystem nach einem der Ansprüche 1 bis 3,
**dadurch gekennzeichnet,**
**daß** die fahrbare Transporteinrichtung zur Fahrtrichtungsänderung über eine die Muskelkraft übertragende Zug- oder/und Schubstange (8,9) lenkbar ist.

5. Transportsystem nach einem der Ansprüche 1 bis 4,
**dadurch gekennzeichnet,**
**daß** die fahrbare Transporteinrichtung zur Mitführung in dem Fahrzeug auf insbesondere Normmaße verkleinerbar, insbesondere zusammenlegbar oder zusammenklappbar, ist.

6. Transportsystem nach einem der Ansprüche 1 bis 5,
**dadurch gekennzeichnet,**
**daß** die fahrbare Transporteinrichtung Zuladungsmöglichkeiten bietet, die mit einem in Großmärkten verwendeten Einkaufswagen vergleichbar sind.

7. Transportsystem nach einem der Ansprüche 1 bis 6,
**dadurch gekennzeichnet,**
**daß** die fahrbare Transporteinrichtung zur Zuladung mit einem Container koppelbar ist oder einen Container (11a) umfaßt.

8. Transportsystem nach Anspruch 7,
**dadurch gekennzeichnet,**
**daß** der Container (11a), insbesondere im Hinblick auf die Verwendbarkeit in unterschiedlichen Fahrzeugen, genormte Abmessungen aufweist.

9. Transportsystem nach Anspruch 7 oder 8.
**dadurch gekennzeichnet,**
**daß** die Abmessungen der fahrbaren Transporteinrichtung die Abmessungen des Containers nicht überschreitet oder sich die fahrbare Transporteinrichtung auf die Abmessung des Containers (11a) verkleinern läßt.

10. Transportsystem nach einem der Ansprüche 1 bis 9,
**dadurch gekennzeichnet,**
**daß** das Fahrzeug ein PKW oder Kleinbus ist.

11. Transportsystem nach einem der Ansprüche 1 bis 10,
**dadurch gekennzeichnet,**
**daß** als Vorkehrungen für die Mifführung der Transporteinrichtung, inbesondere dauerhaft am Fahrzeug, vorzugsweise an die Transporteinrichtung angepaßte und insbesondere Normmaße aufweisende, Halterungseinrichtungen vorgesehen sind.

12. Transportsystem nach Anspruch 11,
**dadurch gekennzeichnet,**
**daß** die Halterungseinrichtungen einen formangepaßten Aufnahmeraum für die Transporteinrichtung und/oder formangepaßte Aufnahmenischen (15-17) für Teile der Transporteinrichtung umfassen.

13. Transportsystem nach Anspruch 11 oder 12,
**dadurch gekennzeichnet,**
**daß** die Halterungseinrichtungen Mittel (19) zur Befestigung der Transporteinrichtung am Fahrzeug umfassen.

14. Transportsystem nach einem der Ansprüche 11 bis 13,
**dadurch gekennzeichnet,**
**daß** die Halterungseinrichtungen zum Zusammenhalten der Transporteinrichtung in einem verkleinerten Zustand vorgesehen sind.

15. Transportsystem nach einem der Ansprüche 11 bis 14,
**dadurch gekennzeichnet**
**daß** die fahrbare Transporteinrichtung unter Zuhilfenahme der Halterungseinrichtung als Stütze verkleinerbar ist.

16. Transportsystem nach einem der Ansprüche 1 bis 15,
**dadurch gekennzeichnet,**
**daß** die fahrbare Vorrichtung zur Mitführung in dem Trägerfahrzeug in das Trägerfahrzeug hinein einfahrbar ist.

## Claims

1. Transporting system having a wheeled transporting device for carrying in a vehicle which is larger than the transporting device, the wheeled transporting device being able to be handled in the manner of a cart which can be driven by pulling or pushing by manual force and having an electric drive, and arrangements (15-17) for carrying the transporting device being provided on the vehicle, **characterized in that** the electric drive can be activated by handling the transporting device, and **in that** the transporting device being carried is functionally connected to the vehicle in such a manner that a device which is connected to the electrical system of the vehicle is provided for charging a battery of the electric drive and/or **in that** a signalling device which indicates whether the wheeled transporting device is and/or is not being carried in the vehicle is provided.

2. Transporting system according to Claim 1, **characterized in that** the electric drive has a drive-control system which uses a sensor to detect manual driving forces which have been applied and by matching them to a predetermined value for a manual driving force which is to be applied, adjusts the driving force of the auxiliary drive so as to compensate.

3. Transporting system according to Claim 2,
**characterized in that** the predetermined value for the manual driving force which is to be applied can be adjusted.

4. Transporting system according to one of Claims 1 to 3, **characterized in that** the wheeled transporting device can be steered in order to change the direction of travel via a pull and/or push bar (8,9) transmitting the manual force.

5. Transporting system according to one of Claims 1 to 4, **characterized in that** the wheeled transporting device can be reduced, in particular collapsed or folded together, to standard dimensions, in particular, for carrying in the vehicle.

6. Transporting system according to one of Claims 1 to 5, **characterized in that** the wheeled transporting device offers loading options comparable to a shopping trolley used in central markets.

7. Transporting system according to one of Claims 1 to 6, **characterized in that** the wheeled transporting device can be coupled, for loading purposes, to a container or includes a container (11a).

8. Transporting system according to Claim 7,
**characterized in that** the container (11a) has standardized dimensions, in particular in respect of being able to use it in different vehicles.

9. Transporting system according to Claim 7 or 8, **characterized in that** the dimensions of the wheeled transporting device do not exceed the dimensions of the container or the wheeled transporting device can be reduced to the dimensions of the container (11a).

10. Transporting system according to one of Claims 1 to 9, **characterized in that** the vehicle is a passenger car or a minibus.

11. Transporting system according to one of Claims 1 to 10, **characterized in that** securing devices which are preferably adapted to the transporting device and, in particular, have standard dimensions are provided on the vehicle, in particular permanently, as arrangements for carrying the transporting device.

12. Transporting system according to Claim 11,
**characterized in that** the securing devices comprise a shape-adapted receiving space for the transporting device and/or shape-adapted receiving niches (15-17) for parts of the transporting device.

13. Transporting system according to Claim 11 or 12, **characterized in that** the securing devices comprise means (19) for fastening the transporting device to the vehicle.

14. Transporting system according to one of Claims 11 to 13, **characterized in that** the securing devices are provided for holding the transporting device together in a reduced state.

15. Transporting system according to one of Claims 11 to 14, **characterized in that** the wheeled transporting device can be reduced using the securing device as a support.

16. Transporting system according to one of Claims 1 to 15, **characterized in that** the wheeled device can be driven into the carrier vehicle for carrying in the carrier vehicle.

## Revendications

1. Système de transport, comportant un dispositif de transport roulant destiné à être emmené dans un véhicule plus grand que le dispositif de transport, le dispositif de transport roulant pouvant être manipulé à la manière d'un chariot entraîné par la force musculaire par traction ou par poussée, et comprenant un entraînement électrique, et des moyens (15 à 17) étant prévus sur le véhicule pour emmener le dispositif de transport, **caractérisé en ce que** l'entraînement électrique peut être activé par la manipulation du dispositif de transport, et **en ce que** le dispositif de transport emmené est en liaison fonctionnelle avec le véhicule, de telle sorte qu'un dispositif relié à l'installation électrique du véhicule est prévu pour charger une batterie de l'entraînement électrique, et/ou **en ce qu'**il est prévu un dispositif de signalisation indiquant que le dispositif de transport roulant est emmené ou non dans le véhicule.

2. Système de transport selon la revendication 1, **caractérisé en ce que** l'entraînement électrique comprend une commande d'entraînement qui détecte par voie sensorielle des forces d'entraînement musculaires appliquées, laquelle règle la force menante de l'entraînement auxiliaire selon une régulation à une valeur prédéterminée de la force d'entraînement musculaire à fournir.

3. Système de transport selon la revendication 2, **caractérisé en ce que** la valeur prédéterminée de la force d'entraînement musculaire est réglable.

4. Système de transport selon l'une quelconque des revendications 1 à 3, **caractérisé en ce que** pour changer de direction de circulation, le dispositif de transport roulant peut être dirigé via une barre de traction et/ou de poussée (8, 9) transmettant la force musculaire.

5. Système de transport selon l'une quelconque des revendications 1 à 4, **caractérisé en ce que** le dispositif de transport peut être rapetissé, en particulier replié ou rabattu, en particulier à des dimensions normalisées pour l'emmener dans le véhicule.

6. Système de transport selon l'une quelconque des revendications 1 à 5, **caractérisé en ce que** le dispositif de transport roulant offre des possibilités de chargement comparables à celles d'un chariot d'achats utilisé dans des supermarchés.

7. Système de transport selon l'une quelconque des revendications 1 à 6, **caractérisé en ce que** le dispositif de transport roulant peut être accouplé à un container ou comprend un container (11a) pour le chargement.

8. Système de transport selon la revendication 7, **caractérisé en ce que** le container (11a) présente des dimensions normalisées, en particulier pour pouvoir l'utiliser dans des véhicules différents.

9. Système de transport selon l'une ou l'autre des revendications 7 et 8, **caractérisé en ce que** les dimensions du dispositif de transport roulant ne dépassent pas les dimensions du container, ou bien le dispositif de transport se laisse rapetisser aux dimensions du container (11a).

10. Système de transport selon l'une quelconque des revendications 1 à 9, **caractérisé en ce que** le véhicule est une voiture particulière ou un minibus.

11. Système de transport selon l'une quelconque des revendications 1 à 10, **caractérisé en ce qu'**il est prévu à titre de moyens pour emmener le dispositif de transport, en particulier durablement sur le véhicule, des dispositifs de monture adaptés de préférence au dispositif de transport et présentant en particulier des dimensions normalisées.

12. Système de transport selon la revendication 11, **caractérisé en ce que** les dispositifs de monture comprennent un espace de réception de forme adaptée pour le dispositif de transport et/ou des niches de réception (15 à 17) de forme adaptée pour des parties du dispositif de transport.

13. Système de transport selon l'une ou l'autre des revendications 11 et 12, **caractérisé en ce que** les dispositifs de monture comprennent des moyens (19) pour fixer le dispositif de transport sur le véhicule.

14. Système de transport selon l'une quelconque des revendications 11 à 13, **caractérisé en ce que** les dispositifs de monture sont prévus pour maintenir assemblé le dispositif de transport dans un état rapetissé.

15. Système de transport selon l'une quelconque des revendications 11 à 14, **caractérisé en ce que** le dispositif de transport roulant peut être rapetissé en ayant recours au dispositif de monture à titre de soutien.

16. Système de transport selon l'une quelconque des revendications 1 à 15, **caractérisé en ce que**, pour l'emmener dans le véhicule porteur, le dispositif de transport roulant peut être déplacé par roulement jusque dans le véhicule porteur.
